# FASCICULE DE BREVET EUROPEEN

(11) **EP 3 317 819 B1**
(45) Date de publication et mention de la délivrance du brevet: **02.12.2020**
(21) Numéro de dépôt: 16742335.9
(22) Date de dépôt: 21.06.2016
(51) Int. Cl.: G06K 19/07

(54) **ENTITÉ ÉLECTRONIQUE ET PROCÉDÉ MIS EN OEUVRE DANS UNE TELLE ENTITÉ ÉLECTRONIQUE**
ELEKTRONISCHE EINHEIT UND VERFAHREN, DAS IN EINER ELEKTRONISCHEN EINHEIT IMPLEMENTIERT IST
ELECTRONIC ENTITY AND METHOD IMPLEMENTED IN AN ELECTRONIC ENTITY

(30) Priorité: 30.06.2015 FR 1556170
(43) Date de publication de la demande: 09.05.2018
(73) Titulaire: IDEMIA France, 92400 Courbevoie (FR)
(72) Inventeur: BOUSQUET, Nicolas, 92700 Colombes (FR); VALLEE, Florian, 92700 Colombes (FR)
(74) Mandataire: Jacobacci Coralis Harle
(86) Numéro de dépôt international: PCT/FR2016/051520
(87) Numéro de publication internationale: WO 2017/001746

(56) Documents cités:
- EP-A1- 2 207 131
- FR-A1- 2 680 262

## Description

### DOMAINE TECHNIQUE AUQUEL SE RAPPORTE L'INVENTION

La présente invention concerne les entités électroniques prévues pour interagir avec un lecteur, telles que les cartes à microcircuit.

Elle concerne plus particulièrement une entité électronique et un procédé mis en œuvre dans une telle entité électronique.

L'invention s'applique particulièrement avantageusement dans le cas où un sous-système, tel qu'un capteur biométrique (ou autre interface utilisateur, par exemple un écran, éventuellement tactile, ou un haut-parleur), doit être intégré dans une entité électronique utilisant un élément sécurisé existant.

### ARRIERE-PLAN TECHNOLOGIQUE

On connaît les entités électroniques, telles que les cartes à microcircuit, dans lesquelles un élément sécurisé est directement accessible à un lecteur externe via une interface de communication, par exemple conformément à la norme ISO7816.

Dans le cadre de la conception de telles entités électroniques, il est avantageux de pouvoir reprendre un élément sécurisé utilisé dans une précédente application, afin notamment d'éviter les coûts de développement et de certification d'un nouveau type d'élément sécurisé.

On souhaite par ailleurs de plus en plus faire interagir l'élément sécurisé d'une telle entité électronique avec un autre sous-système équipant l'entité électronique, tel qu'un capteur biométrique.

Ces deux objectifs sont hélas souvent incompatibles car les éléments sécurisés existants utilisent des moyens d'interaction classiques (par exemple conformes à la norme ISO7816), qui sont rarement adaptés à un échange avec le sous-système précité (les capteurs biométriques disponibles pouvant utiliser par exemple des interfaces série de type SPI ou I2C).

On connaît par ailleurs du document FR 2 938 094 une entité électronique comprenant une interface de communication (en l'occurrence de type USB), un élément sécurisé, un sous-système (comprenant une mémoire ou un capteur biométrique) et un processeur (en l'occurrence un microcontrôleur) relié à l'interface de communication au moyen d'un premier bus, à l'élément sécurisé au moyen d'un second bus et au sous-système.

Dans ce document, le processeur gère la communication entre l'interface de communication de type USB et l'élément sécurisé. Ce document ne concerne donc pas le cas où un lecteur externe doit pouvoir accéder directement à l'élément sécurisé via l'interface de communication.

On connaît également du document EP 2 207 131 un dispositif à circuit intégré comprenant un connecteur conforme à un standard de communication, un premier microcontrôleur ayant une première interface reliée au connecteur et une deuxième interface, et un deuxième microcontrôleur ayant une interface de communication reliée à la deuxième interface.

### OBJET DE L'INVENTION

Dans ce contexte, la présente invention propose une entité électronique selon la revendication 1.

Quand elle est reçue dans un lecteur connecté à l'interface de communication, une telle entité électronique permet ainsi de simuler un échange direct entre le lecteur et l'élément sécurisé (lorsque le processeur est dans son premier mode de fonctionnement) ; l'élément sécurisé peut en outre échanger avec le sous-système via le processeur, même si le sous-système et l'élément sécurisé n'ont pas d'interface commune.

Selon d'autres caractéristiques optionnelles, et donc non limitatives :
- le processeur est conçu pour reproduire sur le premier bus, dans le premier mode, des signaux reçus de l'élément sécurisé sur le second bus ;
- le processeur est conçu pour émettre de manière anticipée sur le premier bus, en réponse auxdits signaux reçus de l'interface de communication, des signaux attendus en provenance de l'élément sécurisé sur le second bus ;
- le processeur est conçu pour émettre, dans le second mode, des données à destination du sous-système ;
- le processeur est conçu pour basculer du premier mode au second mode à réception de données spécifiques sur le second bus en provenance de l'élément sécurisé ;
- le processeur est conçu pour analyser les données transmises sur le premier bus ;
- le processeur est conçu pour basculer du premier mode au second mode lorsque des données spécifiques sont transmises sur le premier bus et analysées par le processeur ;
- le processeur est conçu pour basculer du second mode au premier mode lorsque le traitement de données obtenues par utilisation du sous-système est achevé au sein de l'élément sécurisé ;
- le sous-système est une interface homme machine ;
- le sous-système est un module de communication (par exemple de type Bluetooth ou Wi-Fi) ;
- le sous-système est un capteur biométrique (en variante, le sous-système pourrait être un écran, par exemple un écran tactile, un haut-parleur ou toute interface utilisateur) ;
- lesdites informations sont des données biométriques ;
- le processeur est relié au sous-système par une liaison série, par exemple de type SPI ou I2C ;
- l'interface de communication présente une pluralité de contacts ;
- l'interface de communication est conforme à la norme ISO7816 ;
- le premier bus et le second bus portent chacun un signal d'entrée-sortie conforme à la norme ISO7816.

L'invention propose également un procédé selon la revendication 12.

Les caractéristiques optionnelles présentées ci-dessus dans le cadre de l'entité électronique peuvent s'appliquer de manière analogue à un tel procédé.

En particulier, le procédé peut comprendre l'une au moins des étapes suivantes :
- reproduction, par le processeur (dans le premier mode) et sur le premier bus, de signaux reçus de l'élément sécurisé sur le second bus ;
- émission par le processeur de manière anticipée sur le premier bus, en réponse auxdits signaux reçus de l'interface de communication, de signaux attendus en provenance de l'élément sécurisé sur le second bus ;
- émission, par le processeur (dans le second mode), de données à destination du sous-système ;
- basculement, par le processeur, du premier mode au second mode à réception de données spécifiques sur le second bus en provenance de l'élément sécurisé ;
- analyse, par le processeur, des données transmises sur le premier bus ;
- basculement, par le processeur, du premier mode au second mode lorsque des données spécifiques sont transmises sur le premier bus et analysées par le processeur ;
- basculement, par le processeur, du second mode au premier mode lorsque le traitement de données obtenues par utilisation du sous-système est achevé au sein de l'élément sécurisé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de dessus d'un exemple d'entité électronique conforme à l'invention ;
- la figure 2 représente schématiquement les principaux éléments de l'entité électronique de la figure 1, en situation de connexion à un lecteur ;
- la figure 3 représente un exemple de branchement possible pour certains des éléments de la figure 2 ;
- la figure 4 est un logigramme illustrant une première partie d'un exemple de procédé mis en œuvre dans l'entité électronique de la figure 1 ;
- la figure 5 est un logigramme illustrant la seconde partie de ce procédé ; et
- la figure 6 est un logigramme illustrant une variante de réalisation de cette seconde partie de procédé.

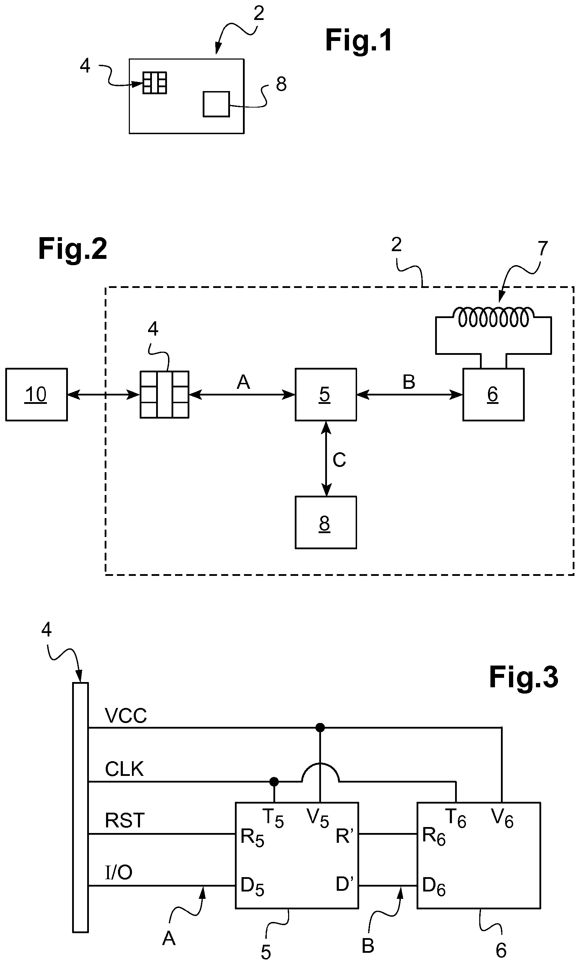

La figure 1 montre une entité électronique conforme à l'invention, ici une carte à microcircuit 2.

La carte à microcircuit 2 comprend une interface de communication 4 formée d'une pluralité de contacts affleurant au niveau de la face supérieure de la carte à microcircuit 2.

Dans le mode de réalisation décrit, la carte à microcircuit 2 comprend en outre un capteur biométrique 8 (ici un capteur d'empreinte digitale) dont une partie affleure également au niveau de la surface supérieure de la carte à microcircuit 2.

En variante, on pourrait utiliser un autre sous-système en lieu et place (ou éventuellement en sus) du capteur biométrique 8, par exemple un écran, un haut-parleur ou une autre interface utilisateur.

La figure 2 représente les principaux éléments de l'entité électronique 2 dans une situation où l'entité électronique 2 est connectée, via son interface de communication 4, à un lecteur 10 (ce qui se produit en pratique lorsque l'entité électronique 2 est insérée dans le lecteur 10).

Outre l'interface de communication (à contacts) 4 et le capteur biométrique 8 déjà mentionné, la carte à microcircuit 2 comprend un microcontrôleur 5 et un élément sécurisé 6.

Le microcontrôleur 5 comprend un processeur (ici un microprocesseur), une mémoire vive et une mémoire non-volatile (ou NVM pour "*Non Volatile Memory*"), généralement réinscriptible (par exemple de type EEPROM pour "*Electrically Erasable and Programmable Read-Only Memory*" ou de type Flash).

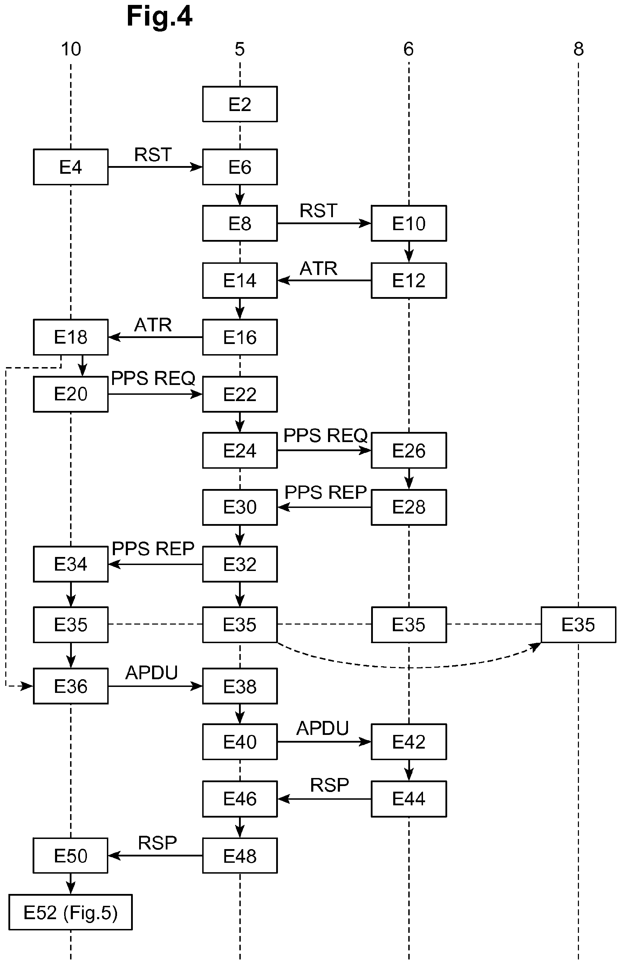

Une mémoire du microcontrôleur 5 (ici la mémoire non-volatile réinscriptible) mémorise des instructions de programme d'ordinateur exécutables par le processeur du microcontrôleur 5. Certaines de ces instructions entraînent, lorsqu'elles sont exécutées par le processeur du microcontrôleur 5, la mise en œuvre par le microcontrôleur 5 des procédés décrits ci-dessous en référence aux figures 4 à 6.

L'élément sécurisé 6 est réalisé sous la forme d'un microcircuit (ou circuit intégré) et comprend lui aussi un processeur (par exemple un microprocesseur) et des mémoires, telles qu'une mémoire vive et une mémoire non-volatile réinscriptible. Une mémoire de l'élément sécurisé 6 (ici la mémoire non-volatile réinscriptible) mémorise des instructions de programme d'ordinateur exécutables par le processeur de l'élément sécurisé 6. Certaines de ces instructions entraînent, lorsqu'elles sont exécutées par le processeur de l'élément sécurisé 6, la mise en œuvre par l'élément sécurisé 6 des procédés décrits ci-dessous en référence aux figures 4 à 6.

L'élément sécurisé 6 est par ailleurs conçu, du fait de sa construction physique et de la conception des programmes d'ordinateur qu'elle mémorise, de façon à rendre très difficile, voire impossible, pour un attaquant l'accès (par lecture et/ou modification) aux données confidentielles qu'elle mémorise. Ainsi, l'élément sécurisé 6 a par exemple un niveau d'assurance EAL supérieur à 4 au sens des Critères Communs (norme ISO15408), par exemple un niveau EAL4+ (VAN5) ou supérieur, et/ou un niveau supérieur à 3 selon la norme FIPS 140-2 (pour "*Federal Information Processing Standard").*

L'élément sécurisé 6 est connecté à une antenne 7 au moyen de laquelle l'élément sécurisé 6 peut échanger des données avec d'autres entités électroniques via une liaison sans fil de proximité, telle qu'une liaison conforme à la norme ISO1443 ou utilisant une technologie de type Communication en Champ Proche (couramment dénommée NFC de l'anglais "*Near Field Communication*")*.*

Le microcontrôleur 5 est relié d'une part à l'interface de communication 4 au moyen d'un premier bus A et à l'élément sécurisé 6 au moyen d'un second bus B, ici identique au premier bus A. On prévoit en revanche ici que l'élément sécurisé 6 ne soit pas directement relié à l'interface de communication 4.

Dans l'exemple décrit, le premier bus A et le second bus B sont chacun conçus pour porter des échanges de données conformes à la norme ISO7816.

Lorsque la carte à microcircuit 2 est insérée dans le lecteur 10 et que le microcontrôleur 5 est donc connecté au lecteur 10 via l'interface de communication (à contacts) 4, une liaison conforme à la norme ISO7816 peut ainsi s'établir (notamment via le premier bus A) entre le lecteur 10 et le microcontrôleur 5.

De même, une liaison conforme à la norme ISO7816 peut s'établir entre le microcontrôleur 5 et l'élément sécurisé 6 via le second bus B.

Le microcontrôleur 5 et le capteur biométrique 8 sont quant à eux reliés par une liaison C, ici différente de celle permise par le premier bus A ou le second bus B, telle qu'une liaison série, par exemple de type SPI (pour "*Serial Peripheral Interface*") ou I2C (pour "*Inter Integrated Circuit*")*.*

Comme expliqué de manière détaillée dans la suite, le microcontrôleur 5 a deux modes de fonctionnement :
- dans un premier mode de fonctionnement, le microcontrôleur 5 reproduit sur le second bus B des signaux reçus de l'interface de communication 4 sur le premier bus A, et reproduit sur le premier bus A des signaux reçus de l'élément sécurisé 6 sur le second bus B ;
- dans un second mode, le microcontrôleur 5 génère sur le second bus B des signaux déterminés en fonction d'informations reçues (via la liaison C) du capteur biométrique 8 et émet, à destination du capteur biométrique 8 (via la liaison C), des données (par exemple des instructions) déterminées en fonction de signaux reçus sur le second bus B.

Ainsi, dans le premier mode de fonctionnement, le microcontrôleur 5 émule le lecteur 10 pour l'élément sécurisé 6 et l'élément sécurisé 6 pour le lecteur 10 : le lecteur 10 et l'élément sécurisé 6 échangent des signaux (par exemple conformément à la norme ISO7816) comme s'ils étaient directement reliés via l'interface de communication 4.

Dans le second mode de fonctionnement, le microcontrôleur 5 joue le rôle d'intermédiaire et permet un échange de données entre le capteur biométrique 8 et l'élément sécurisé 6 bien que ceux-ci n'utilisent pas le même protocole de communication.

On prévoit en outre qu'au cours du second mode de fonctionnement, le microcontrôleur 5 génère des signaux d'attente sur le premier bus A, à destination du lecteur 10 de manière à maintenir la liaison établie avec le lecteur (ici selon la norme ISO7816), comme expliqué plus loin.

La figure 3 représente un exemple de branchement envisageable pour l'interface de communication 4, le microcontrôleur 5 et l'élément sécurisé 6.

Comme déjà indiqué, l'interface de communication 4 est conçue pour porter des signaux conformes à la norme ISO7816 et comprend de ce fait un contact VCC dédié à un signal d'alimentation, un contact CLK dédié à un signal d'horloge, un contact RST dédié à un signal de réinitialisation et un contact I/O dédié à un signal de données (de type entrée-sortie, c'est-à-dire bidirectionnel).

Dans l'exemple décrit ici, le contact VCC est relié à une broche d'alimentation V₅ du microcontrôleur 5 et à une broche d'alimentation V₆ de l'élément sécurisé 6. De même, le contact CLK est relié à une broche d'horloge T₅ du microcontrôleur 5 et à une broche d'horloge T₆ de l'élément sécurisé 6.

L'utilisation d'une horloge commune (représentée par le signal porté par le contact CLK) pour le microcontrôleur 5 et l'élément sécurisé 6 facilite la synchronisation de ces deux éléments lors des procédés décrits plus bas.

Le contact RST de l'interface de communication 4 est quant à lui connecté à une première broche de réinitialisation R₅ du microcontrôleur 5, tandis que le contact I/O de l'interface de communication 4 est connecté à une première broche de données D₅ du microcontrôleur 5, ce qui correspond au premier bus A mentionné plus haut.

Une seconde broche de réinitialisation R' du microcontrôleur 5 est par ailleurs connectée à une broche de réinitialisation R₆ de l'élément sécurisé 6 et une seconde broche de données D' du microcontrôleur 5 est connectée à une broche de données D₆ de l'élément sécurisé 6, ce qui correspond au second bus B mentionné plus haut.

On remarque que l'élément sécurisé 6 est conçu pour fonctionner dans le cadre de la norme ISO7816 (et peut avoir été développé en vue d'une précédente application dans ce cadre) et que la broche de réinitialisation R₆ et la broche de données D₆ de l'élément sécurisé 6 sont donc destinées dans ce cadre à recevoir respectivement un signal de réinitialisation tel que celui présent sur le contact RST de l'interface de communication 4 et un signal de données tel que celui présent sur le contact I/O de l'interface de communication 4.

La figure 4 est un logigramme illustrant une première partie d'un exemple de procédé mis en œuvre dans l'entité électronique 2.

Ce procédé débute lorsque la carte à microcircuit 2 est insérée dans le lecteur 10 et qu'une tension d'alimentation (fournie par le lecteur 10 et portée par le contact VCC de l'interface de communication 4) est ainsi présente sur les broches d'alimentation V5, V6 du microcontrôleur 5 et de l'élément sécurisé 6.

À sa mise sous tension, le microcontrôleur 5 s'initialise dans son premier mode de fonctionnement (étape E2) et se place en attente d'un signal en provenance du lecteur 10.

Le lecteur 10 émet à l'étape E4 un signal de réinitialisation (niveau haut sur le contact RST) qui est transmis au microcontrôleur via le premier bus A (précisément via le contact RST et la première broche de réinitialisation R₅).

Le microcontrôleur 5 reçoit ainsi à l'étape E6 le signal de réinitialisation et génère un signal du même type sur le second bus B, à destination de l'élément sécurisé 6, ici en mettant au niveau haut le signal présent sur la seconde broche de réinitialisation R' (étape E8).

Ce signal de réinitialisation est reçu par l'élément sécurisé 6 à l'étape E10 (par passage au niveau haut de la broche de réinitialisation R₆).

L'élément sécurisé 6, qui est conçu comme déjà indiqué pour fonctionner conformément à ce que prévoit la norme ISO7816, prépare une réponse sous forme d'un message ATR (pour *"Answer To Reset")* et émet ce message à l'étape E12 sur le second bus B, précisément sur la broche de données D₆. Le message ATR contient des données relatives à l'élément sécurisé 6 (type d'élément sécurisé, état de l'élément sécurisé) et des paramètres de communication proposés par l'élément sécurisé 6.

Le microcontrôleur 5 reçoit à l'étape E14 le message ATR via le second bus B (précisément sur la seconde broche de données D') et le transmet sur le premier bus A, c'est-à-dire à destination du lecteur 10 et via l'interface de communication 4, à l'étape E16, en reproduisant sur la première broche de données D₅ les signaux détectés sur la seconde broche de données D'.

Selon une variante envisageable, afin de respecter certaines contraintes temporelles imposées par la norme ISO7861, le microcontrôleur 5 anticipe l'émission sur le premier bus A (à destination du lecteur 10) de certaines données formant le message ATR, par exemple le premier octet du message ATR (de valeur constante égale à 3B en hexadécimal). Les données émises de manière anticipée sont par exemple émise entre les étapes E6 et E8 décrites ci-dessus, ou pendant ou immédiatement après l'étape E8. Dans un tel cas, seules les données qui n'ont pas été émises de manière anticipée sont reproduites sur le premier bus A (ici les données formant l'ATR autres que le premier octet de valeur hexadécimale 3B).

Le microcontrôleur peut éventuellement analyser les données transmises au sein du message ATR, notamment pour vérifier l'état de l'élément sécurisé 6 et prendre connaissance des paramètres de communication proposés.

Le lecteur 10 reçoit ainsi à l'étape E18 le message ATR et peut traiter les données contenues dans ce message.

On remarque que le lecteur 10 et l'élément sécurisé 6 fonctionnent comme s'ils étaient directement connectés l'un à l'autre, comme prévu dans la norme ISO7816. Dans le premier mode de fonctionnement, le microcontrôleur 5 agit donc comme un tunnel au travers duquel passent les informations échangées entre le lecteur 10 et l'élément sécurisé 6.

Lorsque les paramètres de connexion reçus au sein du message ATR indiquent que l'élément sécurisé 6 impose un protocole de communication spécifique (c'est-à-dire en présence de données de type TA₂ dans le cadre de la norme ISO7816), le procédé se poursuit directement à l'étape E36 (comme indiqué par une flèche pointillée en figure 4).

Si au contraire le protocole de communication n'est pas imposé (c'est-à-dire en l'absence de données de type TA₂ dans le cadre de la norme ISO7816), le procédé se poursuit comme indiqué à présent pour négociation du protocole de communication entre le lecteur 10 et l'élément sécurisé 6.

Le lecteur émet à l'étape E20 une requête de type PPS (pour "*Protocol and Parameters Selection*") sur l'interface de communication 4 (précisément sur le contact I/O). La requête PPS est accompagnée de paramètres envisagés pour la communication (par exemple, dans le cadre de la norme ISO7816, de données représentant un entier Fi et de données représentant un entier Di, le rapport Fi/Di indiquant le nombre de périodes d'horloge correspondant à une unité de temps élémentaire - ou ETU pour "*Elementary Time Unit*", laquelle correspond à la durée attribuée à l'émission ou la réception d'un bit de données). Ces paramètres sont par exemple déterminés par le lecteur 10 en fonction des données annexées au message ATR reçues à l'étape E18.

La requête PPS accompagnée des paramètres de communication est reçue par le microcontrôleur 5 via le premier bus A (précisément sur la première broche de données D₅) à l'étape E22, ce qui permet au microcontrôleur 5 de prendre connaissance des paramètres de communication et de mémoriser des données relatives au type de communication envisagée (ces données mémorisées étant par exemple identiques aux données accompagnant la requête PPS).

Le microcontrôleur 5 transmet ensuite la requête PPS à l'élément sécurisé 6 (étape E24) en reproduisant sur le second bus B (ici sur la seconde broche de données D') les signaux reçus à l'étape E22 sur le premier bus A.

L'élément sécurisé 6 reçoit ainsi, via le second bus B, la requête PPS et les paramètres envisagés pour la communication (étape E26) et traite ces éléments, par exemple en mémorisant les paramètres reçus et en les acceptant.

Comme prévu par la norme ISO 7816, en cas d'acceptation des paramètres de communication par l'élément sécurisé 6, ce dernier émet (ici à l'étape E28) une réponse PPS accompagnée de paramètres identiques à ceux reçus à l'étape E26.

Le microcontrôleur 5 reçoit donc cette réponse PPS via le second bus B à l'étape E30.

Le microcontrôleur 5 peut ainsi vérifier que les paramètres de communication annexés à la réponse PPS sont identiques à ceux reçus (et mémorisés) à l'étape E22, ce qui confirme que l'élément sécurisé 6 a accepté de mettre en place une communication avec ces paramètres. Le microcontrôleur 5 peut alors éventuellement adapter sa propre configuration aux paramètres de communication spécifiés afin de traiter correctement les échanges ultérieurs, comme indiqué ci-dessous à l'étape E35.

Le microcontrôleur 5 transmet par ailleurs la réponse PPS au lecteur 10 via le premier bus A (étape E32), en reproduisant sur le premier bus A (ici sur la première broche de données D₅) les signaux reçus à l'étape E30 sur le second bus B (ici sur la seconde broche de données D').

Le lecteur 10 reçoit à l'étape E34 la réponse PPS accompagnée des paramètres de communication, identiques à ceux émis à l'étape E20 dans l'exemple décrit, comme si l'élément sécurisé 6 avait répondu directement via l'interface de communication 4.

Dans ce cas, les paramètres de communication sont adoptés pour la suite des échanges. Pour ce faire, le lecteur 10, le microcontrôleur 5 et l'élément sécurisé 6 (ainsi qu'éventuellement le sous-système 8, par exemple sous la commande du microcontrôleur 5) mettent chacun à jour à l'étape E35 leurs paramètres de communication (conformément aux paramètres négociés comme indiqué ci-dessus).

Le lecteur 10 poursuit alors son fonctionnement en émettant à l'étape E36 une commande de type APDU (pour "*Application Protocol Data Unit*") sur l'interface de communication 4 (précisément ici sur le contact I/O).

Le microcontrôleur 5 détecte à l'étape E38 les signaux correspondant à cette commande APDU sur le premier bus A. Pour ce faire, comme indiqué ci-dessus, le microcontrôleur 5 tient compte, le cas échéant, des paramètres de communication reçus avec la réponse PPS à l'étape E30. Le microcontrôleur 5 peut également analyser les signaux détectés, par exemple afin de pouvoir déterminer à l'avance à quel moment s'achèvent les signaux représentant la commande APDU.

Le microcontrôleur 5 transmet alors (étape E40) la commande APDU à l'élément sécurisé 6 via le second bus B en reproduisant sur ce second bus B les signaux détectés sur le premier bus A lors de l'étape E38. Après cette étape E40, le microcontrôleur 5 analyse les signaux du second bus B en attente de l'étape E46 décrite plus bas.

L'élément sécurisé 6 reçoit cette commande APDU via le second bus B à l'étape E42 et effectue le traitement requis par cette commande.

Une fois le traitement effectué, l'élément sécurisé 6 émet à l'étape E44 un message de réponse RSP sur le second bus B, qui inclut un statut de la réponse (dans le cadre de la norme ISO7816, deux octets valant 9000 en hexadécimal lorsque le traitement s'est effectué correctement) et éventuellement des données de réponse.

Le message de réponse RSP est détecté par le microcontrôleur 5 à l'étape E46 et transmis par le microcontrôleur 5 au lecteur 10 via le premier bus A (étape E48) par reproduction, sur le premier bus A (ici sur la première broche de données D₅), des signaux détectés à l'étape E46 sur le second bus B (précisément ici sur la seconde broche de données D').

Le message de réponse RSP est ainsi reçu par le lecteur 10 à l'étape E50.

On remarque que le processus qui vient d'être décrit aux étapes E36 à E50 peut être répété pour toute commande de type APDU émise par le lecteur 10 et dont le traitement peut être réalisé par l'élément sécurisé 6 seul.

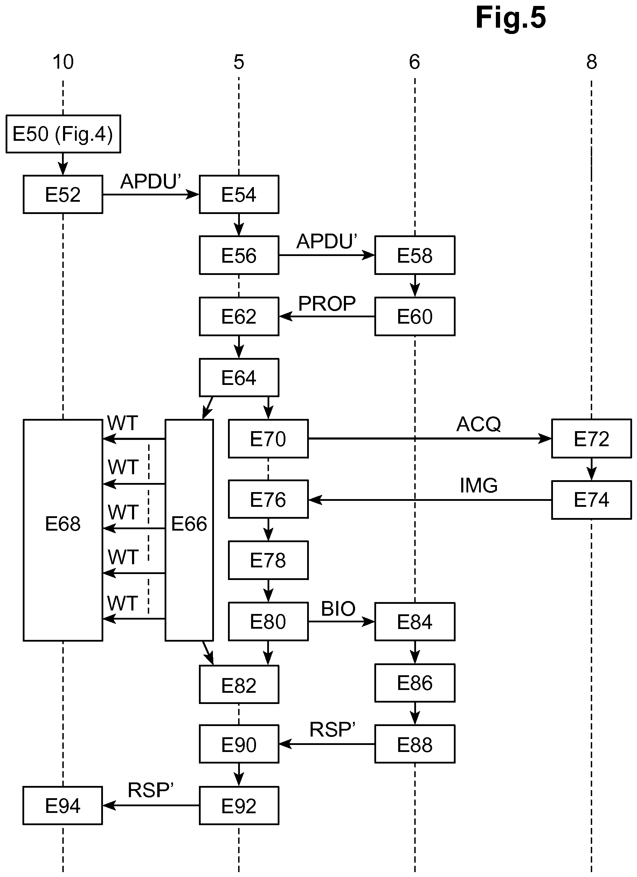

On décrit à présent en référence à la figure 5 un exemple de processus mis en œuvre lorsque le traitement demandé par une commande de type APDU requiert l'utilisation d'un autre sous-système, ici le capteur biométrique 8.

La figure 5 est en effet un logigramme présentant la suite du procédé qui vient d'être décrit en référence à la figure 4.

Le lecteur 10 émet à l'étape E52 une commande de type APDU (notée APDU' en figure 5) à destination de l'entité électronique 2, c'est-à-dire sur l'interface de communication 4. Cette commande APDU' est par exemple accompagnée d'un message à signer.

Les signaux représentant cette commande APDU' sont détectés sur le premier bus A (précisément sur la première broche de données D₅) par le microcontrôleur 5 lors de l'étape E54 et reproduits sur le second bus B (précisément sur la seconde broche de données D') lors de l'étape E56, de manière analogue à ce qui a été décrit ci-dessus aux étapes E36 et E38.

L'élément sécurisé 6 reçoit donc la commande APDU' via le second bus B à l'étape E58 et initie donc le traitement requis par cette commande.

On considère ici que la commande APDU' nécessite pour son traitement l'utilisation d'un sous-système de l'entité électronique 2 relié au microcontrôleur 5, ce sous-système étant ici le capteur biométrique 8.

L'élément sécurisé 6 détermine donc à réception de la commande APDU' (étape E58) que le traitement de cette commande nécessite des données biométriques prises par le capteur biométrique 8 et émet pour ce faire à l'étape E60, sur le second bus B (ici sur la broche de données D₆), des données spécifiques PROP (ou motif), indicatives d'une demande de données en provenance du sous-système (ici des données biométriques).

Les données spécifiques PROP sont reçues à l'étape E62 par le microcontrôleur 5, qui détermine, par analyse de ces données, que l'utilisation du sous-système (capteur biométrique 8) est requise.

Le microcontrôleur 5 bascule alors (étape E64) dans son second mode de fonctionnement.

Dans ce second mode de fonctionnement, le microcontrôleur 5 émet régulièrement (par exemple périodiquement) des messages d'attente WT sur le premier bus A à destination du lecteur 10, comme schématiquement représenté à l'étape E66 en figure 5. Un tel message d'attente WT est par exemple l'octet NULL (de valeur 60 en hexadécimal) d'un message de procédure destiné au lecteur 10 dans le cadre du protocole T=0 prévu par le norme ISO78176, ou un bloc de requête de prolongation de temps de réponse (ou "*WTX request*") dans le cadre du protocole T=1.

Le lecteur 10 reçoit ces messages d'attente WT (comme représenté schématiquement à l'étape E68), ce qui permet de maintenir effective la communication entre le lecteur 10 et l'entité électronique (carte à microcircuit) 2 pendant que les traitements qui suivent sont effectués.

En effet, lors du second mode de fonctionnement, le microcontrôleur 5 fait appel au sous-système (ici le capteur biométrique 8) via la liaison C (étape E70), par exemple en émettant sur la liaison C une demande destinée au sous-système, ici une demande d'acquisition ACQ de données biométriques.

Le sous-système (ici le capteur biométrique 8) reçoit cette demande à l'étape E72 et effectue le traitement indiqué par cette demande, ici une acquisition de données biométriques.

Les données générées par ce traitement (ici une image IMG prise par le capteur biométrique 8, en l'occurrence une image d'une empreinte digitale) sont émises via la liaison C à l'étape E74, à destination du microcontrôleur 5.

Le microcontrôleur 5 reçoit via la liaison C les données générées par le sous-système (ici l'image IMG générée par le capteur biométrique 8) à l'étape E76 et procède à un traitement éventuel de ces données (étape E78), telle qu'une extraction de caractéristiques biométriques BIO (ou "*template*"), ici des caractéristiques représentatives de l'empreinte digitale représentée dans l'image IMG, par exemple un ensemble de minuties.

Le microcontrôleur 5 reformate alors éventuellement les données obtenues grâce à l'utilisation du sous-système (données brutes générées par le sous-système et/ou données issues du traitement de l'étape E78, ici les caractéristiques biométriques extraites BIO) de manière à ce qu'elles puissent être émises à l'étape E80 sur le second bus B, par exemple au sein de commandes APDU ou conformément à un autre protocole normé ou propriétaire. Le formatage précité des données comprend par exemple une encapsulation des données au sein d'un bloc de données ayant un format prédéterminé (et représentant par exemple une commande). En variante, aucun formatage n'est effectué et les données brutes (générées par le sous-système) sont (directement) émises sur le second bus B à l'étape E80.

Le microcontrôleur 5 peut alors basculer dans le premier mode de fonctionnement (étape E82) et se place en attente de signaux sur le second bus B. Le microcontrôleur 5 peut ainsi mettre fin à cette occasion à l'émission périodique des messages d'attente WT. On remarque que le basculement du microcontrôleur 5 dans le premier mode de fonctionnement peut éventuellement n'être effectué que lorsque le traitement (décrit ci-dessous) des données obtenues par utilisation du sous-système est achevé au sein de l'élément sécurisé 6.

L'élément sécurisé 6 reçoit à l'étape E84 les données obtenues par l'utilisation du sous-système, ici les caractéristiques biométriques BIO, via le second bus B. On remarque que l'élément sécurisé 6 était en attente de ces données depuis son émission des données spécifiques PROP à l'étape E60.

L'élément sécurisé 6 peut ainsi effectuer à l'étape E86 le traitement correspondant à la commande APDU' (reçue à l'étape E58) en utilisant les données obtenues par l'utilisation du sous-système (ici les caractéristiques biométriques BIO). Ce traitement comprend par exemple la comparaison des données reçues à l'étape E84 à des données correspondantes mémorisées dans l'élément sécurisé 6 et, en cas de réussite de la comparaison, la signature du message à signer (annexé à la commande APDU' comme indiqué plus haut) au moyen d'une clé secrète (ou clé privée) mémorisée dans l'élément sécurisé 6, c'est-à-dire l'application au message à signer d'un algorithme cryptographique de signature utilisant la clé secrète.

En variante, le traitement pourrait être par exemple le déblocage d'une fonctionnalité de l'élément sécurisé 6, cette fonctionnalité pouvant être une commande spécifique exécutable par l'élément sécurisé 6 ou un applet mémorisé dans l'élément sécurisé 6.

L'élément sécurisé 6 émet un message de réponse RSP' (contenant le message signé en cas de réussite de la comparaison précitée) sur le second bus B (étape E88). On peut par ailleurs prévoir que le message de réponse RSP' contienne un code d'erreur en cas d'échec de la comparaison précitée (ou d'autre anomalie de fonctionnement).

Le microcontrôleur 5 détecte les signaux représentant ce message de réponse RSP' sur le second bus B à l'étape E90 et reproduit ces signaux sur le premier bus A (étape E92).

Le lecteur 10 reçoit ainsi le message de réponse RSP' à l'étape E94 (via l'interface de communication 4) comme s'il avait été émis directement par l'élément sécurisé 6 sur l'interface de communication 4.

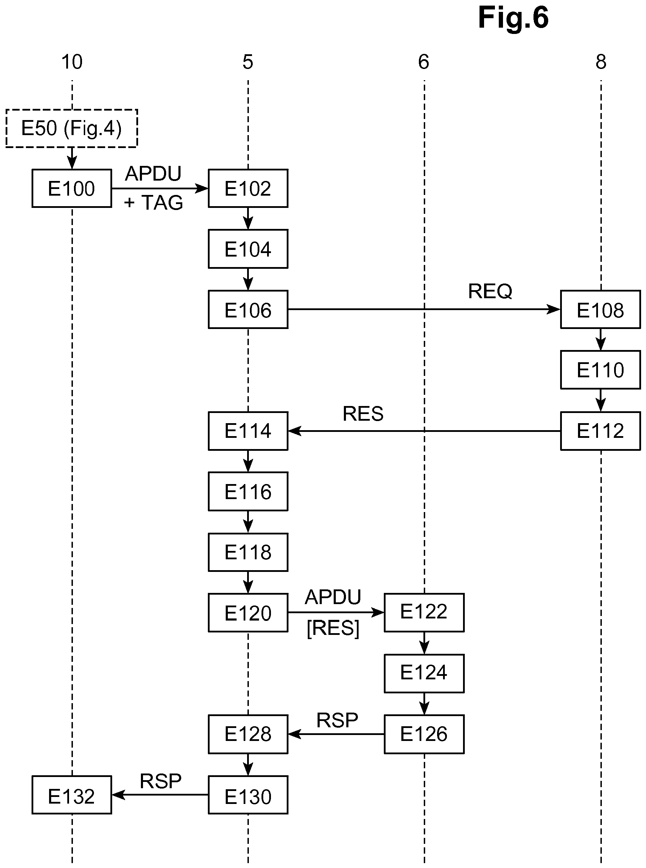

La figure 6 est un logigramme illustrant une variante de réalisation du procédé qui vient d'être décrit en référence à la figure 5.

Une telle variante de procédé fait donc suite par exemple à un procédé tel que celui décrit en référence à la figure 4 (jusqu'à l'étape E50).

Le lecteur 10 émet une commande de type APDU sur l'interface de communication 4 à l'étape E100. Cette commande inclut une étiquette TAG indiquant que des données biométriques sont requises par l'élément sécurisé 6 pour traiter la commande. Cette étiquette TAG peut être soit la commande elle-même (par exemple lorsqu'il est possible de déduire du type de la commande que des données biométriques sont requises, comme c'est par exemple le cas pour une commande de vérification biométrique), soit des données additionnelles spécifiques annexées à la commande.

Le microcontrôleur 5 reçoit la commande incluant l'étiquette TAG via le premier bus A à l'étape E102 et analyse les données reçues.

Le microcontrôleur 5 mémorise par exemple une liste des commandes de type APDU pour lesquelles il est prévu que la carte à microcircuit 2 impose la présence de son porteur (vérifiée à l'aide du capteur d'empreinte digitale 8) : le microcontrôleur 5 peut ainsi comparer le type de la commande reçue aux types de commande mémorisés. Dans ce cas, comme déjà indiqué, l'étiquette TAG détectée par le microcontrôleur 5 correspond au type de commande.

En variante, le microcontrôleur 5 recherche dans les données reçues les données additionnelles spécifiques susmentionnées.

Du fait de la détection (lors de l'analyse des données par le microcontrôleur 5) de l'étiquette TAG, le microcontrôleur 5 bascule à l'étape E104 dans son second mode de fonctionnement.

Bien que cela ne soit pas montré en figure 6, le microcontrôleur 5 émet périodiquement des messages d'attente sur le premier bus A, à destination du lecteur 10, pendant toute la durée du second mode de fonctionnement.

Le microcontrôleur 5 émet à l'étape E106 une requête REQ d'acquisition de données biométriques à destination du capteur biométrique 8 via la liaison C.

Le capteur biométrique 8 reçoit cette requête REQ à l'étape E108 et lance à l'étape E100 une acquisition des données biométriques (par exemple une image d'une empreinte digitale du porteur) et un traitement éventuel.

Les données biométriques obtenues RES à l'étape E110 sont émises en réponse à destination du microcontrôleur 5 à l'étape E112.

Le microcontrôleur 5 reçoit les données biométriques RES à l'étape E114.

Le microcontrôleur 5 peut alors éventuellement procéder à un traitement complémentaire des données biométriques reçues (par exemple, comme dans le cadre de la figure 5, à une extraction des caractéristiques biométriques).

Le microcontrôleur 5 procède alors à l'étape E116 au formatage des données biométriques (le cas échéant traitées), ici au format de la norme ISO7816.

Le microcontrôleur 5 bascule par ailleurs à l'étape E118 dans le premier mode de fonctionnement.

Le microcontrôleur 5 émet alors sur le second bus B la commande reçue à l'étape E102 (étape E120), en reproduisant sur la seconde broche de données D' les signaux détectés lors de l'étape 102 sur la première broche de données D₅.

Le microcontrôleur 5 émet également sur le second bus B, lors de cette étape E120, les données biométriques formatées (par exemple selon un format défini par une norme, comme la norme ISO 19794, ou un format propriétaire, le format correspondant de manière générale à un format adapté à l'étape de comparaison décrite ci-après).

L'élément sécurisé 6 reçoit la commande et les données biométriques à l'étape E122 et procède au traitement de la commande à l'étape E124.

Ce traitement comprend par exemple la comparaison des données biométriques reçues à des données biométriques mémorisées dans l'élément sécurisé 6, ainsi qu'éventuellement, en cas de comparaison positive, la signature d'un message (qui peut être annexé à la commande reçue) au moyen d'un algorithme cryptographique utilisant une clé secrète mémorisée dans l'élément sécurisé 6.

L'élément sécurisé 6 émet un message de réponse RSP (qui inclut éventuellement des données de réponse, telles que le message signé précité) sur le second bus B (c'est-à-dire par l'émission de signaux représentant ce message de réponse RSP sur la broche de données D₆).

Du fait notamment qu'il est alors dans son premier mode de fonctionnement, le microcontrôleur 5 détecte ces signaux sur sa seconde broche de données D' à l'étape E128 et reproduit ces signaux sur sa première broche de données (c'est-à-dire sur le premier bus A) à l'étape E130.

Le lecteur 10 reçoit ainsi (via l'interface de communication 4) le message de réponse RSP à l'étape E132.

## Revendications

1. Entité électronique (2) comprenant une interface de communication (4), un processeur (5), un élément sécurisé (6) et un sous-système (8), le processeur (5) étant relié à l'interface de communication (4) au moyen d'un premier bus (A), à l'élément sécurisé (6) au moyen d'un second bus (B) et au sous-système (8),
le processeur (5) étant conçu pour fonctionner dans un premier mode, dans lequel il reproduit sur le second bus (B) des signaux reçus de l'interface de communication (4) sur le premier bus (A),
**caractérisée en ce que** le processeur (5) est conçu pour fonctionner alternativement dans le premier mode et dans un second mode, et dans le second mode le processeur (5) génère sur le second bus (B) des signaux déterminés en fonction d'informations reçues du sous-système (8), et **en ce que** le processeur (5) est conçu pour émettre, dans le second mode, des signaux d'attente sur le premier bus (A) à destination de l'interface de communication (4).

2. Entité électronique selon la revendication 1, dans laquelle le processeur (5) est conçu pour reproduire sur le premier bus (A), dans le premier mode, des signaux reçus de l'élément sécurisé (6) sur le second bus (B).

3. Entité électronique selon la revendication 2, dans laquelle le processeur (5) est conçu pour émettre de manière anticipée sur le premier bus (A), en réponse auxdits signaux reçus de l'interface de communication (4), des signaux attendus en provenance de l'élément sécurisé (6) sur le second bus (B).

4. Entité électronique selon l'une des revendications 1 à 3, dans laquelle le processeur (5) est conçu pour émettre, dans le second mode, des données à destination du sous-système (8).

5. Entité électronique selon l'une des revendications 1 à 4, dans laquelle le processeur (5) est conçu pour basculer du premier mode au second mode à réception de données spécifiques sur le second bus (B) en provenance de l'élément sécurisé (6).

6. Entité électronique selon l'une des revendications 1 à 4, dans laquelle le processeur (5) est conçu pour analyser les données transmises sur le premier bus (A) et pour basculer du premier mode au second mode lorsque des données spécifiques sont transmises sur le premier bus (A) et analysées par le processeur (5).

7. Entité électronique selon l'une des revendications 1 à 6, dans laquelle le processeur (5) est conçu pour basculer du second mode au premier mode lorsque le traitement de données obtenues par utilisation du sous-système (8) est achevé au sein de l'élément sécurisé (6).

8. Entité électronique selon l'une des revendications 1 à 7, dans laquelle le sous-système (8) est une interface homme machine ou un module de communication.

9. Entité électronique selon l'une des revendications 1 à 8, dans laquelle le sous-système est un capteur biométrique (8).

10. Entité électronique selon l'une des revendications 1 à 9, dans laquelle lesdites informations sont des données biométriques.

11. Entité électronique selon l'une des revendications 1 à 10, dans laquelle le processeur (5) est relié au sous-système (8) par une liaison série (C).

12. Procédé mis en œuvre dans une entité électronique (2) comprenant une interface de communication (4), un processeur (5), un élément sécurisé (6) et un sous-système (8), le processeur étant relié à l'interface de communication (4) au moyen d'un premier bus (A), à l'élément sécurisé (6) au moyen d'un second bus (B) et au sous-système (8),
le procédé comprenant les étapes suivantes lorsque le processeur (5) fonctionne dans un premier mode :
- détection (E6 ; E22 ; E38 ; E54 ; E102) par le processeur (5) de premiers signaux reçus de l'interface de communication (4) sur le premier bus (A) ;
- reproduction (E8 ; E24 ; E40 ; E56 ; E120) desdits premiers signaux sur le second bus (B) ; et les étapes suivantes lorsque le processeur (5) fonctionne dans un second mode:
- réception (E76 ; E114) d'informations en provenance du sous-système (8) ;
- génération (E80 ; E120) sur le second bus (B) de signaux déterminés en fonction des informations reçues ;
- émission, par le processeur (5), de signaux d'attente sur le premier bus (A) à destination de l'interface de communication (4).

13. Procédé selon la revendication 12, comprenant une étape de reproduction, par le processeur (5) et sur le premier bus (A), de signaux reçus de l'élément sécurisé (6) sur le second bus (B) lorsque le processeur (5) fonctionne dans le premier mode.

14. Procédé selon la revendication 13, comprenant une étape d'émission par le processeur (5) de manière anticipée sur le premier bus (A), en réponse auxdits signaux reçus de l'interface de communication (4), de signaux attendus en provenance de l'élément sécurisé (6) sur le second bus (B) lorsque le processeur (5) fonctionne dans le premier mode.

15. Procédé selon l'une des revendications 12 à 14, comprenant une étape d'émission, par le processeur (5), de données à destination du sous-système (8) lorsque le processeur (5) fonctionne dans le second mode.

16. Procédé selon l'une des revendications 12 à 15, comprenant une étape de basculement, par le processeur (5), du premier mode au second mode à réception de données spécifiques sur le second bus (B) en provenance de l'élément sécurisé (6).

17. Procédé selon l'une des revendications 12 à 15, comprenant une étape d'analyse, par le processeur (5), des données transmises sur le premier bus (A) et de basculement, par le processeur (5), du premier mode au second mode lorsque des données spécifiques sont transmises sur le premier bus (A) et analysées par le processeur (5).

18. Procédé selon la revendication 16 ou 17, comprenant une étape de basculement, par le processeur (5), du second mode au premier mode lorsque le traitement de données obtenues par utilisation du sous-système (8) est achevé au sein de l'élément sécurisé (6).

19. Procédé selon l'une des revendications 12 à 18, dans lequel le sous-système (8) est une interface homme machine ou un module de communication.

20. Procédé selon l'une des revendications 12 à 19, dans lequel le sous-système est un capteur biométrique (8).

## Patentansprüche

1. Elektronische Einheit (2) mit einer Kommunikationsschnittstelle (4), einem Prozessor (5), einem gesicherten Element (6) und einem Untersystem (8), wobei der Prozessor (5) mit der Kommunikationsschnittstelle (4) über einen ersten Bus (A) und mit dem gesicherten Element (6) über einen zweiten Bus (B) und mit dem Untersystem (8) verbunden ist,
wobei der Prozessor (5) dazu ausgelegt ist, in einem ersten Modus zu funktionieren, bei dem er auf dem zweiten Bus (B) Signale reproduziert, die er von der Kommunikationsschnittstelle (4) über den ersten Bus (A) empfangen hat, **dadurch gekennzeichnet, daß** der Prozessor (5) dazu ausgelegt ist, alternativ im ersten Modus und in einem zweiten Modus zu funktionieren, und daß der Prozessor (5) im zweiten Modus auf dem zweiten Bus (B) Signale erzeugt, die in Abhängigkeit von vom Untersystem (8) empfangenen Informationen bestimmt werden, und daß der Prozessor (5) dazu ausgelegt ist, im zweiten Modus auf dem ersten Bus (A) an die Kommunikationsschnittstelle (4) gerichtete Wartesignale abzugeben.

2. Elektronische Einheit gemäß Anspruch 1, bei der der Prozessor (5) dazu ausgelegt ist, auf dem ersten Bus (A) im ersten Modus vom gesicherten Element (6) über den zweiten Bus (B) empfangene Signale zu reproduzieren.

3. Elektronische Einheit gemäß Anspruch 2, bei der der Prozessor (5) dazu ausgelegt ist, vorzeitig auf dem ersten Bus (A), als Antwort auf die von der Kommunikationsschnittstelle (4) empfangenen Signale, Signale abzugeben, die von dem gesicherten Element (6) auf dem zweiten Bus (B) erwartet werden.

4. Elektronische Einheit gemäß einem der Ansprüche 1 bis 3, bei der der Prozessor (5) dazu ausgelegt ist, im zweiten Modus an das Untersystem (8) gerichtete Daten abzugeben.

5. Elektronische Einheit gemäß einem der Ansprüche 1 bis 4, bei der der Prozessor (5) dazu ausgelegt ist, bei Empfang spezifischer, auf dem zweiten Bus (B) vom gesicherten Element (6) kommender Daten vom ersten Modus in den zweiten Modus zu wechseln.

6. Elektronische Einheit gemäß einem der Ansprüche 1 bis 4, bei der der Prozessor (5) dazu ausgelegt ist, die auf dem ersten Bus (A) übermittelten Daten zu analysieren und vom ersten Modus in den zweiten Modus zu wechseln, wenn spezifische Daten auf dem ersten Bus (A) übermittelt und vom Prozessor (5) analysiert worden sind.

7. Elektronische Einheit gemäß einem der Ansprüche 1 bis 6, bei der der Prozessor (5) dazu ausgelegt ist, vom zweiten Modus in den ersten Modus zu wechseln, wenn die Bearbeitung von durch Benutzung des Untersystems (8) erhaltenen Daten im gesicherten Element (6) beendet ist.

8. Elektronische Einheit gemäß einem der Ansprüche 1 bis 7, bei der das Untersystem (8) eine Mensch-Maschine-Schnittstelle oder ein Kommunikationsmodul ist.

9. Elektronische Einheit gemäß einem der Ansprüche 1 bis 8, bei der das Untersystem ein biometrischer Sensor (8) ist.

10. Elektronische Einheit gemäß einem der Ansprüche 1 bis 9, bei der die Informationen biometrische Daten sind.

11. Elektronische Einheit gemäß einem der Ansprüche 1 bis 10, bei der der Prozessor (5) mit dem Untersystem (8) durch eine serielle Verbindung (C) verbunden ist.

12. Verfahren, das in einer elektronischen Einheit (2) mit einer Kommunikationsschnittstelle (4), einem Prozessor (5), einem gesicherten Element (6) und einem Untersystem (8) implementiert ist, wobei der Prozessor (5) mit der Kommunikationsschnittstelle (4) über einen ersten Bus (A) und mit dem gesicherten Element (6) über einen zweiten Bus (B) und mit dem Untersystem (8) verbunden ist,
wobei das Verfahren die folgenden Schritte aufweist, wenn der Prozessor (5) in einem ersten Modus arbeitet:
- Erfassen (E6; E22; E38; E54; E102) von über den ersten Bus (A) von der Kommunikationsschnittstelle (4) empfangenen ersten Signalen durch den Prozessor(5);
- Reproduktion (E8; E24; E40; E56; E120) der ersten Signale auf dem zweiten Bus (B);
und die folgenden Schritte aufweist, wenn der Prozessor (5) in einem zweiten Modus arbeitet:
- Empfangen (E76; E114) von vom Untersystem (8) kommenden Informationen;
- Erzeugen (E80; E120) von in Abhängigkeit von den empfangenen Informationen bestimmten Signalen auf dem zweiten Bus (B);
- Abgabe durch den Prozessor (5) von Wartesignalen auf dem ersten Bus (A) zur Kommunikationsschnittstelle (4) hin.

13. Verfahren gemäß Anspruch 12 mit einem Schritt der Reproduktion von vom gesicherten Element (6) über den zweiten Bus (B) empfangenen Signalen durch den Prozessor (5) und auf dem ersten Bus (A), wenn der Prozessor (5) im ersten Modus arbeitet.

14. Verfahren gemäß Anspruch 13 mit einem Schritt der Abgabe von Signalen, die als vom gesicherten Element (6) über den zweiten Bus (B) kommend erwartet worden sind, durch den Prozessor (5) in vorzeitiger Weise auf dem ersten Bus (A) als Antwort auf die von der Kommunikationsschnittstelle (4) empfangenen Signale, wenn der Prozessor (5) im ersten Modus arbeitet.

15. Verfahren gemäß einem der Ansprüche 12 bis 14 mit einem Schritt der Abgabe von Daten an das Untersystem (8) durch den Prozessor (5), wenn der Prozessor (5) im zweiten Modus arbeitet.

16. Verfahren gemäß einem der Ansprüche 12 bis 15 mit einem Schritt des Wechselns durch den Prozessor (5) vom ersten Modus zum zweiten Modus bei Empfang von vom gesicherten Element (6) über den zweiten Bus (B) kommenden spezifischen Daten.

17. Verfahren gemäß einem der Ansprüche 12 bis 15 mit einem Schritt der Analyse von auf dem ersten Bus (A) übermittelten Daten durch den Prozessor (5) und des Wechselns vom ersten Modus zum zweiten Modus durch den Prozessor (5), wenn spezifische Daten auf dem ersten Bus (A) übermittelt und durch den Prozessor (5) analysiert werden.

18. Verfahren gemäß Anspruch 16 oder 17 mit einem Schritt des Wechselns durch den Prozessor (5) vom zweiten Modus zum ersten Modus, wenn die Bearbeitung von durch Benutzung des Untersystems (8) erhaltenen Daten im gesicherten Element (6) beendet ist.

19. Verfahren gemäß einem der Ansprüche 12 bis 18, bei dem das Untersystem (8) eine Mensch-Maschine-Schnittstelle oder ein Kommunikationsmodul ist.

20. Verfahren gemäß einem der Ansprüche 12 bis 19, bei dem das Untersystem ein biometrischer Sensor (8) ist.

## Claims

1. An electronic unit (2) comprising a communication interface (4), a processor (5), a secure element (6) and a sub-system (8), the processor (5) being connected to the communication interface (4) by means of a first bus (A), to the secure element (6) by means of a second bus (B) and to the sub-system (8),
the processor (5) being designed to operate in a first mode, in which it reproduces, on the second bus (B), signals received from the communication interface (4) on the first bus (A),
**characterised in that** the processor (5) is designed to operate alternately in the first mode and in a second mode, and in the second mode the processor (5) generates on the second bus (B) signals determined as a function of information received from the sub-system (8), and **in that** the processor (5) is designed to transmit, in the second mode, wait signals on the first bus (A) to the communication interface (4).

2. The electronic unit as claimed in claim 1, wherein the processor (5) is designed to reproduce, on the first bus (A), in the first mode, signals received from the secure element (6) on the second bus (B).

3. The electronic unit as claimed in claim 2, wherein the processor (5) is designed to transmit in an anticipated manner on the first bus (A), in response to said signals received from the communication interface (4), expected signals coming from the secure element (6) on the second bus (B).

4. The electronic unit as claimed in one of claims 1 to 3, wherein the processor (5) is designed to transmit, in the second mode, data to the sub-system (8).

5. The electronic unit as claimed in one of claims 1 to 4, wherein the processor (5) is designed to switch from first mode to the second mode on reception of specific data on the second bus (B) coming from the secure element (6).

6. The electronic unit as claimed in one of claims 1 to 4, wherein the processor (5) is designed for analysing the data transmitted on the first bus (A) and to switch from the first mode to the second mode when specific data are transmitted on the first bus (A) and analysed by the processor (5).

7. The electronic unit as claimed in one of claims 1 to 6, wherein the processor (5) is designed to switch from the second mode to the first mode when the processing of data obtained by use of the sub-system (8) is completed within the secure element (6).

8. The electronic unit as claimed in one of claims 1 to 7, wherein the sub-system (8) is a man machine interface or a communication module.

9. The electronic unit as claimed in one of claims 1 to 8, wherein the sub-system is a biometric sensor (8).

10. The electronic unit as claimed in one of claims 1 to 9, wherein said information is biometric data.

11. The electronic unit as claimed in one of claims 1 to 10, wherein the processor (5) is connected to the sub-system (8) via a serial link (C).

12. A method used in an electronic unit (2) comprising a communication interface (4), a processor (5), a secure element (6) and a sub-system (8), the processor being connected to the communication interface (4) by means of a first bus (A), to the secure element (6) by means of a second bus (B) and to the sub-system (8),
the method comprising the following steps when the processor (5) operates in a first mode:
- detection (E6; E22; E38, E54; E102) by the processor (5) of first signals received from the communication interface (4) on the first bus (A);
- reproduction (E8; E24; E40; E56; E120) of said first signals on the second bus (B); and the following steps when the processor (5) operates in a second mode:
- reception (E76; E114) of information coming from the sub-system (8);
- generation (E80; E120), on the second bus (B), of signals determined as a function of the information received;
- transmission, by the processor (5), of wait signals on the first bus (A) to the communication interface (4).

13. The method as claimed in claim 12, comprising a step of reproduction, by the processor (5) and on the first bus (A), of signals received from the secure element (6) on the second bus (B) when the processor (5) operates in the first mode.

14. The method as claimed in claim 13, comprising a step of transmission by the processor (5) in an anticipated manner on the first bus (A), in response to said signals received from the communication interface (4), of expected signals coming from the secure element (6) on the second bus (B) when the processor (5) operates in the first mode.

15. The method as claimed in one of claims 12 to 14, comprising a step of transmission, by the processor (5), of data to the sub-system (8) when the processor (5) operates in the second mode.

16. The method as claimed in one of claims 12 to 15, comprising a step of switching, by the processor (5), from the first mode to the second mode on reception of specific data on the second bus (B) coming from the secure element (6).

17. The method as claimed in one of claims 12 to 15, comprising a step of analysis, by the processor (5), of the data transmitted on the first bus (A) and of switching, by the processor (5), from the first mode to the second mode when specific data are transmitted on the first bus (A) and analysed by the processor (5).

18. The method as claimed in claim 16 or 17, comprising a step of switching, by the processor (5), from the second mode to the first mode when the processing of data obtained by use of the sub-system (8) is completed within the secure element (6).

19. The method as claimed in one of claims 12 to 18, wherein the sub-system is a man machine interface or a communication module.

20. The method as claimed in one of claims 12 to 19, wherein the sub-system is a biometric sensor (8).
